# EUROPÄISCHE PATENTSCHRIFT

(11) **EP 2 175 171 B1**
(45) Veröffentlichungstag und Bekanntmachung des Hinweises auf die Patenterteilung: **13.04.2011**
(21) Anmeldenummer: 09011742.5
(22) Anmeldetag: 15.09.2009
(51) Int. Cl.: F16H 61/02, F16H 59/72, B60W 10/10, B60W 20/00, B60K 6/48

(54) **Verfahren zum Schalten eines Getriebes und Fahrzeug**
Method for switching a transmission and vehicle
Procédé de commutation d'un engrenage et véhicule

(30) Priorität: 11.10.2008 DE 102008051283
(43) Veröffentlichungstag der Anmeldung: 14.04.2010
(73) Patentinhaber: Bayerische Motoren Werke, 80809 München (DE)
(72) Erfinder: Stempel, Christian, 84036 Landshut (DE)

(56) Entgegenhaltungen:
- EP-A- 0 562 803
- WO-A-2008/064633
- DE-A1- 19 932 755
- US-A- 5 873 426

## Beschreibung

Die vorliegende Erfindung betrifft ein Verfahren zum Schalten eines Getriebes gemäß dem Oberbegriff des Patentanspruches 1, sowie ein Fahrzeug mit einem entsprechend geschalteten Getriebe gemäß dem Oberbegriff des Patentanspruches 4.

Ein Verfahren gemäß dem Oberbegriff des Patentanspruches 1 bzw. ein Fahrzeug gemäß dem Oberbegriff des Patentanspruches 4 ist aus der US 5 873 426 bekannt. Zum relevanten Stand der Technik zählen ferner die EP 562 803 A2, DE 199 32 755 A1 sowie die WO 2008/064633 A1.

Der Antriebsstrang von Parallelhybridfahrzeugen, die als "Vollhybride" bezeichnet werden können, d. h. bei denen wahlweise rein verbrennungsmotorischer Antrieb, rein elektromotorischer Antrieb sowie verbrennungsmotorischer Antrieb unterstützt durch elektromotorischen Antrieb möglich ist, ist üblicherweise folgendermaßen aufgebaut. Die Ausgangswelle des Verbrennungsmotors ist drehfest mit einer Primärseite einer Trennkupplung verbunden. Zwischen der Sekundärseite der Trennkupplung und dem Getriebeeingang ist eine elektrische Maschine angeordnet, die bei abgekoppeltem Verbrennungsmotor rein elektrisches Fahren ermöglicht bzw. die eine Drehmomentunterstützung des Verbrennungsmotors und in Schubphasen des Fahrzeugs eine Rekuperation mechanischer Energie ermöglicht.

Als Trennkupplungen hierfür werden üblicherweise nasslaufende Kupplungen verwendet. Bei nasslaufenden Kupplungen tritt in geöffnetem Zustand der Kupplung ein Schleppmoment an der Kupplung auf, das von der Temperatur des Kupplungsöls abhängt. Bei kaltem Kupplungsöl ist das Schleppmoment und somit die an der Kupplung auftretende Verlustleistung deutlich höher als bei betriebswarmem Kupplungsöl. Wird eine derartige Kupplung bei einem Vollhybridsystem als Motortrennkupplung eingesetzt, so entsteht bei rein elektrischem Fahrbetrieb, d. h. wenn der Verbrennungsmotor durch Öffnen der Kupplung abgekoppelt ist, aufgrund der sich an der Kupplung einstellenden Differenzdrehzahl eine Verlustleistung, die sich ungünstig auf den Gesamtenergieverbrauch des Fahrzeugs und letztlich ungünstig auf den Kraftstoffverbrauch auswirkt.

Aufgabe der Erfindung ist es, ein Verfahren sowie ein Fahrzeug anzugeben, mittels dem bzw. bei dem die an der Motortrennkupplung auftretende Verlustleistung verringerbar ist.

Diese Aufgabe wird durch die Merkmale der Patentansprüche 1 und 4 gelöst. Vorteilhafte Ausgestaltungen und Weiterbildungen der Erfindung sind den Unteransprüchen zu entnehmen.

Das Grundprinzip der Erfindung besteht darin, in Betriebszuständen, in denen die Motortrennkupplung geöffnet ist und die Temperatur der Kupplung bzw. des Kupplungsöls gering ist, das Getriebe, sofern die übrigen momentanen "Anforderungs- bzw. Zustandsparameter" dies gestatten, in einen Übersetzungszustand zu schalten, bei dem die an der geöffneten Motortrennkupplung auftretende Verlustleistung bzw. der an der Motortrennkupplung auftretende Schlupf möglichst gering ist.

Die Erfindung geht dabei von einem Verfahren aus, bei dem ein Getriebe mittels einer Getriebeschaltelektronik in unterschiedliche Übersetzungszustände geschaltet wird. Der Getriebeschaltelektronik werden hierzu verschiedene primäre Eingangsparameter wie z. B. die vom Fahrer über das Gaspedal vorgegebene Leistungsanforderung, Geschwindigkeit, Drehzahl etc. sowie mindestens ein sekundärer Eingangsparameter zugeführt.

Der Kern der Erfindung besteht darin, dass es sich bei dem mindestens einen sekundären Eingangsparameter um ein Signal handelt, das der Temperatur der auf der Eingangsseite des Getriebes angeordneten nasslaufenden Motortrennkupplung, die im Folgenden kurz als "Kupplung" bezeichnet wird, entspricht oder damit korreliert oder das der Kupplungsöltemperatur der auf der Eingangsseite des Getriebes angeordneten nasslaufenden Motortrennkupplung entspricht oder damit korreliert.

Es sei ausdrücklich darauf hingewiesen, dass nicht notwendigerweise die Temperatur des Öls der Kupplung gemessen und dieses Signal als sekundärer Eingangsparameter verwendet werden muss. Sofern ein Getriebe verwendet wird, das einen Öltemperatursensor zur Messung der Temperatur des Ölsumpfs des Getriebes aufweist, wie dies bei manchen herkömmlichen Automatikgetrieben der Fall ist, kann auch dieses Signal verwendet werden, da es hinreichend genau mit der Kupplungsöltemperatur korreliert.

Alternativ dazu kann auch die "Bauteiltemperatur" der Kupplung direkt oder indirekt gemessen oder näherungsweise errechnet werden. Beispielsweise kann hierzu in der Schalt-Software des Getriebes eine Funktion implemetiert sein, mittels der die Bauteiltemperatur der Trennkupplung, welche unmittelbar durch die bei rein elektrischem Fahren auftretende Verlustleistung beeinflusst wird, errechnet wird. Für die näherungsweise Berechnung der Kupplungstemperatur kann ein mehrdimensionales Temperaturmodell verwendet werden, das in der Getriebeschaltelektronik abgelegt sein kann.

Das erfindungsgemäße Verfahren wird also eingesetzt, wenn die Kupplungs- bzw. Getriebeöltemperatur unterhalb eines Normalbetriebstemperaturbereichs liegt, in dem das Getriebe warm gefahren ist.

Nach einer Weiterbildung der Erfindung wird elektronisch sensiert, z. B. mittels eines Sensors oder durch Überwachen eines entsprechenden Kupplungsschaltsignals, ob die Kupplung geschlossen oder geöffnet ist. Der Getriebeschaltelektronik wird ein entsprechendes den Öffnungs- bzw. Schließzustand der Kupplung anzeigendes Signal zugeführt.

Um die bei geöffneter Kupplung an der Kupplung auftretende Schlepp- bzw. Verlustleistung zu minimieren ist in der Getriebeschaltelektronik eine Schaltlogik implementiert, die bei niedrigen Kupplungsöltemperaturen das Getriebe in einen anderen Übersetzungszustand schaltet als bei und bei ansonsten gleichen Eingangsparametern und höheren Kupplungsöltemperaturen, wodurch erreicht wird, dass bei niedrigen Kupplungsöltemperaturen bei ansonsten gleichen Eingangsparametern an der geöffneten Kupplung ein geringerer Schlupf auftritt als bei höheren Öltemperaturen. Der bei niedrigen Öltemperaturen höheren Viskosität des Öls versucht man also durch eine Verringerung des Schlupfs "entgegenzuwirken" und auf diese Weise die an der Kupplung auftretende Verlustleistung möglichst gering zu halten.

Beispielsweise kann vorgesehen sein, dass das oben beschriebene Verfahren nur bei Kupplungs- bzw. Getriebeöltemperaturen angewendet wird, die kleiner als 80°C, vorzugsweise kleiner als 60°C sind.

Bei dem Getriebe handelt es sich um ein Automatikgetriebe. Die Erfindung ist sowohl bei Stufenautomatikgetrieben als auch bei stufenlos schaltbaren Automatikgetrieben sowie bei "Mischformen" anwendbar. Weist das Getriebe diskrete Gangübersetzungen auf, so sollte ein geeigneter Kompromiss zwischen Drehzahlabsenkung, Schalthäufigkeit, Beschleunigungsvermögen, Fahrbarkeit etc. gesucht werden.

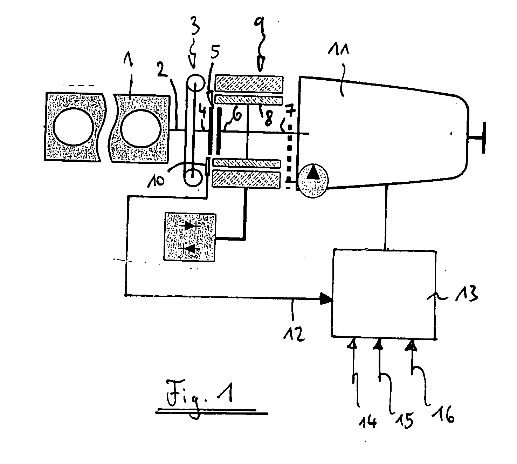

Figur 1 zeigt in schematischer Darstellung das Antriebskonzept eines als Vollhybrid betreibbaren Parallelhybridfahrzeugs gemäß der Erfindung. Das Fahrzeug weist einen Verbrennungsmotor 1 auf, dessen Kurbelwelle 2 über einen Drehschwingungsdämpfer 3 mit einer Primärseite 4 einer Motor-Trennkupplung, die im Folgenden kurz als "Kupplung" bezeichnet wird, verbunden ist. Eine Sekundärseite 6 der Kupplung ist mit einer Getriebeeingangswelle 7 verbunden. Drehfest mit der Sekundärseite 6 und der Getriebeeingangswelle 7 ist ein Rotor 8 einer elektrischen Maschine 9 verbunden.

Ferner ist ein Temperatursensor 10 vorgesehen, der die Temperatur des Öls der nasslaufenden Kupplung 5 misst. Die Kupplung 5 kann unmittelbar an den Ölkreislauf eines hier nur schematisch dargestellten automatisch schaltbaren Getriebes 11 angeschlossen sein. Der Öltemperatursensor 10 liefert ein der Öltemperatur entsprechendes oder damit korrelierendes elektrisches Signal 12, das einer Getriebeschaltelektronik 13 zugeführt wird. Der Getriebeschaltelektronik 13 werden verschiedene primäre Eingangsparameter 14, 15, 16 zugeführt, bei denen es sich z. B. um die Fahrzeuggeschwindigkeit, Motordrehzahl, eingelegter Getriebegang etc. handelt. Das Signal 12, das der Kupplungsöltemperatur entspricht, wird im Folgenden auch als sekundärer Eingangsparameter bezeichnet.

Bei rein elektrischem Fahren ist die Motortrennkupplung 5 geöffnet. Das Fahrzeug wird somit ausschließlich von der elektrischen Maschine 9 angetrieben. Um die an der Motortrennkupplung 5 auftretende Schlepp- bzw. Verlustleistung möglichst gering zu halten, sollte bei geöffneter Trennkupplung 5 der Schlupf minimiert werden. Dies ist insbesondere bei kaltem Kupplungs- bzw. Getriebeöl sinnvoll, da bei niedrigen Öltemperaturen die Viskosität des Öls entsprechend hoch ist.

Wenn mittels des Temperatursensors 10 sensiert wird, dass sich die Kupplungs- bzw. Getriebeöltemperatur in einem vordefinierten "niedrigen Temperaturbereich" befindet, so schaltet die Getriebeschaltelektronik 13 das Getriebe 11, sofern die übrigen Eingangsparameter 14 - 16 dies gestatten, in einen Übersetzungs- bzw. Schaltzustand, in dem der an der Trennkupplung 5 auftretende Schlupf möglichst gering ist. Bei geöffneter Kupplung 5 und niedriger Kupplungs- bzw. Getriebeöltemperatur schaltet die Getriebeschaltelektronik 13 das Getriebe 11 bei ansonsten gleichen Eingangsparametern somit in einem anderen Übersetzungszustand als bei höheren Öltemperaturen.

## Patentansprüche

1. Verfahren zum Schalten eines Getriebes (11) in unterschiedliche Übersetzungszustände mittels einer Getriebeschaltelektronik (13), wobei der Getriebeschaltelektronik (13) verschiedene primäre Eingangsparameter (14 - 16) und mindestens ein sekundärer Eingangsparameter (12) zugeführt werden, wobei der sekundäre Eingangsparameter (12) ein Signal ist, das einer Öltemperatur einer auf einer Eingangsseite des Getriebes (11) angeordneten nasslaufenden Kupplung (5) entspricht oder damit korreliert,
**dadurch gekennzeichnet, dass**
in Betriebszuständen, in denen die Kupplung (5) geöffnet ist und die Öltemperatur sich in einem Öltemperaturbereich unterhalb eines Normalbetriebstemperaturbereichs befindet, das Getriebe (11), sofern die primären Eingangsparameter es gestatten, in einen Übersetzungszustand geschaltet wird, in dem eine an der Kupplung (5) auftretende Differenzdrehzahl möglichst gering ist.

2. Verfahren nach Anspruch 1, **dadurch gekennzeichnet, dass** ermittelt wird, insbesondere mittels eines Sensors, ob die Kupplung (5) geschlossen oder geöffnet ist, wobei der Getriebeschaltelektronik (13) ein entsprechendes Kupplungssignal zugeführt wird.

3. Verfahren nach Anspruch 1 oder 2, **dadurch gekennzeichnet, dass** die Getriebeschaltelektronik (13) bei geöffneter Kupplung (5) und niedrigen Öltemperaturen das Getriebe (11) in einen anderen Übersetzungszustand schaltet als bei ansonsten gleichen Eingangsparametern und höheren Öltemperaturen, so dass bei niedrigen Öltemperaturen an der geöffneten Kupplung eine geringere Differenzdrehzahl auftritt als bei höheren Öltemperaturen und ansonsten gleichen Eingangsparametern.

4. Fahrzeug mit
- einem Getriebe (11),
- einer Getriebeschaltelektronik (13),
- einer auf einer Eingangsseite des Getriebes (11) angeordneten, in einem Öl laufenden Kupplung (5), die ein Primärelement (4) und ein Sekundärelement (6) aufweist, welche bei geschlossener Kupplung (5) miteinander drehgekoppelt sind und welche bei geöffneter Kupplung (5) eine Differenzdrehzahl aufweisen,
- wobei das Getriebe (11) von der Getriebeschaltelektronik (13) in Abhängigkeit verschiedener primärer Eingangsparameter (14- 16) und mindestens eines sekundären Eingangsparameters (12) in unterschiedliche Übersetzungszustände schaltbar ist, wobei der mindestens eine sekundäre Eingangsparameter (12) ein Signal ist, das von einem Temperatursensor (10) ermitteltet wird und einer Öltemperatur eines Öls der Kupplung (5) entspricht oder damit korreliert,
**dadurch gekennzeichnet, dass**
die Getriebeschaltelektronik so ausgelegt ist, dass in Betriebszuständen, in denen die Kupplung (5) geöffnet ist und die Öltemperatur sich in einem Öltemperaturbereich unterhalb eines Normalbetriebstemperaturbereichs befindet, das Getriebe (11), sofern die primären Eingangsparameter es gestatten, in einen Übersetzungszustand geschaltet wird, in dem die an der Kupplung (5) auftretende Differenzdrehzahl möglichst gering ist.

5. Fahrzeug nach Anspruch 4, **dadurch gekennzeichnet, dass** zwischen der Kupplung (5) und dem Getriebeeingang (7) eine mit dem Getriebeeingang (7) drehgekoppelte elektrische Maschine (9) angeordnet ist.

6. Fahrzeug nach Anspruch 4 oder 5, **dadurch gekennzeichnet, dass** auf der Primärseite der Kupplung (5) ein Verbrennungsmotor (1) angeordnet ist, der eine Kurbelwelle (2) aufweist, die mit dem Primärseite (4) der Kupplung (5) verbunden ist.

## Claims

1. A method for switching a transmission (11) to different gear ratio states by means of an electronic transmission switching system (13), various primary input parameters (14 - 16) and at least one secondary input parameter (12) being supplied to the electronic transmission switching system (13), the secondary input parameter (12) being a signal which corresponds to an oil temperature of a wet-running clutch (5) arranged on an input side of the transmission (11) or correlates therewith,
**characterised in that**
in operating states, in which the clutch (5) is opened and the oil temperature is in an oil temperature range below a normal operating temperature range, the transmission (11), if the primary input parameters allow it, is switched to a gear ratio state, in which a differential rotational speed occurring at the clutch (5) is as low as possible.

2. A method according to claim 1, **characterised in that** it is determined, in particular by means of a sensor, whether the clutch (5) is closed or opened, a corresponding clutch signal being supplied to the electronic transmission switching system (13).

3. A method according to claim 1 or claim 2, **characterised in that** the electronic transmission switching system (13), when the clutch (5) is opened and the oil temperatures are low, switches the transmission (11) to a different gear ratio state than with otherwise identical input parameters and higher oil temperatures, so with low oil temperatures at the opened clutch, a smaller differential rotational speed occurs than at higher oil temperatures and otherwise identical input parameters.

4. A vehicle with
- a transmission (11),
- an electronic transmission switching system (13),
- a clutch (5), which is arranged on an input side of the transmission (11), runs in an oil and has a primary element (4) and a secondary element (6), which are rotationally coupled to one another when the clutch (5) is closed and which have a differential rotational speed when the clutch (5) is opened,
- wherein the transmission (11) can be switched by the electronic transmission switching system (13) depending on various primary input parameters (14 - 16) and at least one secondary input parameter (12) to different gear ratio states, the at least one secondary input parameter (12) being a signal, which is determined by a temperature sensor (10) and corresponds to an oil temperature of an oil of the clutch (5) or correlates therewith,
**characterised in that**
the electronic transmission switching system is designed such that in operating states, in which the clutch (5) is opened and the oil temperature is in an oil temperature range below a normal operating temperature range, the transmission (11), if the primary input parameters allow it, is switched to a gear ratio state, in which the differential rotational speed occurring at the clutch (5) is as low as possible.

5. A vehicle according to claim 4, **characterised in that** an electric machine (9) rotationally coupled to the transmission input (7) is arranged between the clutch (5) and the transmission input (7).

6. A vehicle according to claim 4 or claim 5, **characterised in that** an internal combustion engine (1), which has a crankshaft (2) connected to the primary side (4) of the clutch (5), is arranged on the primary side of the clutch (5).

## Revendications

1. Procédé de commutation d'une boîte de vitesses (11) avec des états de fonctionnement différents par l'intermédiaire d'une électronique de commutation de boîte de vitesses (13),
l'électronique de commutation (13) recevant différents paramètres d'entrée primaires (14-16) et au moins un paramètre d'entrée secondaire (12),
le paramètre d'entrée secondaire (12) étant un signal qui correspond à la température de l'huile d'un embrayage humide (5) installé sur un coté d'entrée de la boîte de vitesses (11) ou en corrélation avec celle-ci, procédé **caractérisé en ce que**
dans les états de fonctionnement dans lesquels l'embrayage (5) est ouvert et la température d'huile est dans une zone de température d'huile en dessous de la plage de températures de fonctionnement normal, et dans la mesure où les paramètres d'entrée primaires le permettent, la boîte de vitesses (11) est commutée dans un état de transmission dans lequel une différence de vitesse de rotation au niveau de l'embrayage (5) est aussi réduite que possible.

2. Procédé selon la revendication 1,
**caractérisé en ce qu'**
on détermine notamment à l'aide d'un capteur, si l'embrayage (5) est embrayé ou est débrayé et l'électronique de commutation de la boîte de vitesses (13) reçoit un signal d'embrayage correspondant.

3. Procédé selon la revendication 1 ou 2,
**caractérisé en ce que**
lorsque l'embrayage (5) est débrayé, et pour des températures d'huile de boîte de vitesses (11), basses, l'électronique de commutation de transmission (13) est commutée dans un autre état de transmission que pour les paramètres d'entrée par ailleurs identiques et des températures d'huile élevées, de sorte qu'aux faibles températures de l'huile, on a une certaine vitesse de rotation différente de l'embrayage ouvert par rapport à celle aux températures élevées, les paramètres d'entrée étant identiques.

4. Véhicule comprenant :
- une boîte de vitesses (11),
- une électronique de commutation de boîte de vitesses (13),
- un embrayage (5) tournant dans l'huile prévu du côté entrée de la boîte de vitesses (11), l'embrayage ayant un élément primaire (4) et un élément secondaire (6) et qui, lorsque l'embrayage (5) est fermé, sont couplés l'un à l'autre alors qu'ils ont une vitesse de rotation différente lorsque l'embrayage (5) est ouvert,
- la boîte de vitesses (11) est commutée par l'électronique de commutation de boîte de vitesses (13) en fonction de différents paramètres d'entrée primaires (14-16) et d'au moins un paramètre d'entrée secondaire (12) dans des états de transmission différents,
* au moins un paramètre d'entrée secondaire (12) étant un signal déterminé par un capteur de température (10), et correspond ou est en corrélation avec la température de l'huile de l'embrayage (5),
véhicule **caractérisé en ce que**
l'électronique de commutation de boîte de vitesses est conçue pour que dans des états de fonctionnement dans lesquels l'embrayage (5) est ouvert et la température de l'huile se trouve dans une plage de températures inférieure à la plage de températures de fonctionnement normale, la boîte de vitesses (11) dans la mesure où les paramètres d'entrée primaires le permettent, commutent dans un état de transmission dans lequel la vitesse de rotation différentielle qui se produit dans l'embrayage (5) est aussi faible que possible.

5. Véhicule selon la revendication 4,
**caractérisé en ce qu'**
un moteur électrique (9) est couplé en rotation à l'entrée (7) de la boîte de vitesses entre l'embrayage (5) et l'entrée de boîte de vitesses (7).

6. Véhicule selon la revendication 4 ou 5,
**caractérisé en ce que**
le côté primaire de l'embrayage (5) est relié à un moteur à combustion (1), comportant un vilebrequin (2) relié au côté primaire (4) de l'embrayage (5).
